(19) Europäisches Patentamt / European Patent Office / Office européen des brevets

(11) **EP 2 037 356 A1**

(12) **EUROPEAN PATENT APPLICATION**

(43) Date of publication:
**18.03.2009 Bulletin 2009/12**

(51) Int Cl.:
***G06F 3/14*** *(2006.01)*

(21) Application number: **07017951.0**

(22) Date of filing: **13.09.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicants:
• **Volohovs, Dimitijs**
 **Riga 1082 (LV)**
• **Mironovs, Sergejs**
 **Riga 1082 (LV)**

(72) Inventors:
• **Volohovs, Dimitijs**
 **Riga 1082 (LV)**
• **Mironovs, Sergejs**
 **Riga 1082 (LV)**

(74) Representative: **Anohins, Vladimirs et al**
 **Agency Tria Robit**
 **P.O. Box 22**
 **Riga 1010 (LV)**

(54) **Large screen display module and method of its use**

(57) The present invention is a scalable display module which is capable of being assembled into large screen video display system, and is capable of displaying video or providing standard digital lighting. The display module further is equipped with internal memory for storing images to be played in the absence of external input of video data, and is controllable by standard lighting console. The method of using the display modules for assembling and operating a lighting or display modular system, includes the steps of: creating video files for each display module and/or creating still images, assigning an address to each of the display modules, programming lighting console, uploading video files and still images into non-volatile memory of each display module, assembling of lighting or display module system, including installing a compatible lighting console and large-scale display construction from an array of display modules, linking lighting or display modular system components to each other by standard lighting protocol compatible data cables and connecting said lighting console by the same standard lighting protocol compatible data cable to the lighting or display modular system, and controlling operation of the display modules through lighting console.

Fig. 1

EP 2 037 356 A1

**Description**

FIELD OF INVENTION

This invention relates to a large screen video display module and a method of operating the same and more particularly to such modules for use in a configurable modular large scale video display used for stage decoration. In particular, this invention relates to a scalable display module with internal memory for storing images to be played in the absence of external input video data, and controllable by standard lighting console.

BACKGROUND OF THE INVENTION

The full-color large screen display has been widely used for displaying pictures and information not only in sports fields and recreation grounds but also outdoor and indoor advertisements, and in area of public events and shows.
The area of public events and shows is of our particular interest. In this area large displays are used not only to show video of large size, but also to show colorful video effects, which are widely used during mass events such as concerts of rock and/or pop music groups.
Lighting control systems are also important facilities for mass events. Lighting control systems are used to create or enhance the atmosphere of a live performance by varying the luminosity of color lights. Lighting systems are typically controlled by lighting console and use digital communication protocol, for example such widely used protocol as DMX. DMX was defined in 1986 by U.S. Institute of Theatre Technology (USITT). Since its emergence, DMX, in particular DMX512, became one of the most commonly adopted interfaces in the industry. DMX512 provides the light operators with a convenience that was unprecedented in earlier lighting control systems. The DMX512 is capable of controlling up to 512 addresses per each lighting group. The DMX512 protocol has allowed uniformity in programming digital lighting.
Another important facility of modern mass events is a video system. Large scale video displays are now being used for sport stadiums, arenas and concert halls. Therefore, the market requires display systems that are easy to install, operate, maintain and disassemble, especially for use in temporary venues. Additionally, in many large scale applications, for example, in large concert halls or stadium music events, both video and lighting effects are desired. However, different display elements and systems are generally needed for large-scale video versus large-scale lighting, in order to create the desired effects. Therefore a large-scale system that is capable of generating both video and digitally controlled lighting is needed.
An example of system that combines video and digitally controlled lighting system is found in reference to EP1650739 A2 of Barco NV, entitled, "Intelligent lighting module, lighting or display module system and method of assembling and configuring such a lighting or display module system". The application details a generic emissive intelligent display module that displays uniform hardware and power requirements, is capable of being formed into seamless display system, and is capable of displaying video or providing standard digital lighting technology in a single module. Intelligent lighting module of application EP1650739 possesses a display board with an array of individual pixel lighting elements and a control board capable of controlling serial input data from a video source for displaying video as well as of controlling digital input data from a lighting console for creating digital lighting effects. A system using intelligent lighting modules includes a plurality of intelligent lighting modules, linked by an interconnect which is connected to a lighting controller which in turn is connected to a video source and/or to a lighting console. The application requires lighting controller connected to intelligent lighting modules and lighting console, and also requires connection of video source.
Therefore, according to the prior art, it is not possible to use intelligent lighting modules and lighting console without additional lighting controller required for conjugation of lighting console with the intelligent lighting modules.
Another disadvantage is that it is not possible to use intelligent lighting modules without video source.
Further disadvantage is that the display modules are to be connected by two data cables, control cable for communication input data from a lighting console and by video cable for serial input data from a video source, and by power cable. When the number of display modules in large screen display in usual application is about 12 - 24 or even more this is a lot of cables.
Therefore, EP1650739 is limited, in that it requires the use of lighting controller and video source as well as additional cabling. Thus, what is needed is a display module that converges video and lighting technology in a single module, capable to operate without video source and lighting controller.
In accordance with the present invention, the display module that is capable to display video and lighting effect without lighting controller and in the absence external video source is created.

SUMMARY OF THE INVENTION

The object of this invention is to provide a display module for use in a lighting or display modular system which is composed of an array of display modules, wherein each of said modules is provided with a display board with an array of individual pixel light emitting elements and with a control board capable of controlling input data from a video source for displaying video as well as of controlling digital communication input data from a lighting console for creating lighting effects, wherein each display module is provided with internal non-volatile memory for storing video files and/or still images to be displayed in the absence of said serial input data from the video source.

It is another object of the invention to provide the display module where non-volatile memory consist of two parts - one for storing video data and another for storing still images. Preferably, the still images stored in the internal non-volatile memory of the display module are of size 8x8 pixels.

Following a preferred embodiment of the display module its internal non-volatile memory for storing video files and/or still images is NAND flash type memory.

Following a preferred embodiment the display modules are controlled by the standard lighting console under DMX protocol.

Following a preferred embodiment light emitting elements are light emitting diodes, preferably said light emitting diodes are of SMD RGB type.

Finally the object of this invention is to provide method of using the display modules according to present invention for assembling and operating a lighting or display modular system. The method includes steps of creating video files for each display module and/or creating still images at a separate computer; assigning an address to each of the display modules within the overall display modular system programming lighting console; uploading video files and still images into non-volatile memory of each display module; assembling of lighting or display module system, including installing a compatible lighting console and large-scale display construction from an array of display modules; linking lighting or display modular system components, including electrical linking of the display modules within the large-scale display to each other by standard lighting protocol compatible data cables and connecting said lighting console by the same standard lighting protocol compatible data cable to the lighting or display modular system; controlling operation of the display modules through lighting console.

BRIEF DESCRIPTION OF THE DRAWINGS

With the intention of better showing the characteristics of the invention, hereafter a preferred form of embodiments is described:

FIG.1 shows a display module functional block diagram according to present invention;
FIG.2 illustrates information area 20 of the display module 1;
FIG.3 illustrates the display module information area 20 division into rectangular sub areas 22;
FIG.4 illustrates several types of pictograms 23, in accordance with present invention;
FIG.5 illustrates representation of a pictogram 23 in accordance with present invention into internal memory 17 of the display module 1;
FIG.6 illustrates block diagram of software, according to one of the preferred embodiments, which is running inside of FPGA 19 of the display module 1;
FIG.7 shows configuration of a modular display system with display modules according to present invention;
FIG.8 shows configuration of a modular display system with display modules according to present invention;
FIG.9 shows another practical application of LED display modules 1;
FIG.10 shows a flow diagram of a method 50 of using display modules according to present invention for assembling and operating a lighting or display modular system.

DETAILED DESCRIPTION OF A PREFERRED EMBODIMENT

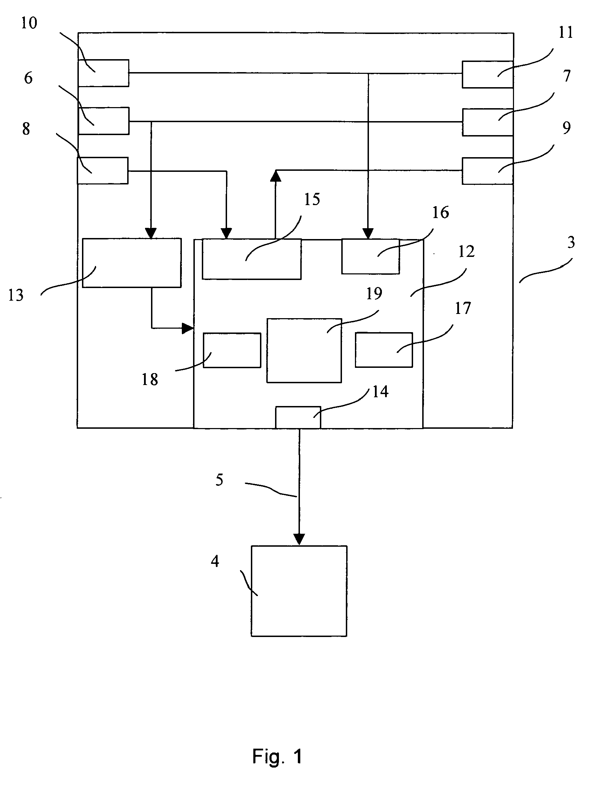

A functional block diagram of a display module 1 in accordance with the invention is shown on Fig. 1. A display module 1 includes a display board 4, control board 12, input for serial data from a display controller 8, input for digital data from a lighting console (lighting data) 10, internal non-volatile memory 17 for storing video files and/or still images to be displayed in the absence of said serial input data from a video source, for example a display controller.

The display module also contain an input for power 6, DC/DC power converter 13, and outputs for serial data 9, lighting data 11, and power 7 which are to be connected to the next display module to interconnect all display modules forming large-scale display system. The control board 12, inputs 6, 8, 10, outputs 7, 9, 11 and DC/DC power converter 13 are combined into control unit 3.

Input for power 6 is a standard, unregulated or regulated power supply for the display module 1, in the present example, 48V DC power. However, other implementation of power is possible and includes AC, for example, 110V or 220V.

Input for power 6 is connected electrically with DC/DC converter 13, which, in the preferred embodiment, converts 48V DC power to 5V DC power, which is necessary for operation of control board 12 and the display board 4.

Output for power 7 is a pass through power line to supply power to the next display module connected in series.

In the preferred embodiment, both, power input 6 and output 7 are realized as 4-pins Speacon connectors from Neutrik.

Serial data coming on input 8 contains control signals and display image data. Control signals comprise, for example, a signals to change brightness of module, signals to adjust position of display module within the overall large-screen display system. Display image data comprise pixel location address, and the value for red, green, and blue components of the pixel color; horizontal and vertical blanking intervals, pixel clock data; however, numerous other color definition and standards are possible for serial data, as is well known to those skilled in the art.

Display module takes only necessary data from serial data flow, in preferred embodiment, only control signals and a part of display image data of 24x24 pixels resolution, according to cropping area coordinates.

Serial data output 9 is an output line that is used to supply control signals and display image data to the next display modules, connected in series. Serial data output transmit the same data flow as it was received from serial data input to the next display module in large scale display system.

Both, serial data input 8 and serial data output 9 are implemented as a high speed fiber optic communication channels. However, other implementation of serial data is possible, for example, high speed copper wire channels.

Input for lighting data 10 is a digital serial input, for example, control data from a standard lighting console as is well known to those skilled in the art, which controls digital lighting effects, such as switching, dimming, fading. Different communication protocols are possible, including custom lighting protocols. According to one aspect of this invention the lighting data are in the form of DMX protocol.

Output for lighting data 11 is a pass-through line to supply lighting data to the next of the display modules, connected in series.

In the preferred embodiment, both, lighting data input 10 and output 11 are realized as 3-pins XLR type connectors from Neutrik.

Control board 12 provides all the power regulation, processing of image data and control data, which is necessary for proper operation of the display module.

In the preferred embodiment, control board 12 further comprises an output connector 14, directly mounted at control board 12. Output connector 14 is used to deliver 5V DC power and serial modulated data to the display board 4 through the cable 5.

Depending on the construction of the display module, the display board may be made on one printed board or consist of several identical printed boards with the array of light emitting elements and electrical drivers need to control said light emitting elements.

In one of the preferred embodiment the display board 4 consist of four printed boards each containing 144 light emitting elements (12x12 pixels) therefore each display module contains 576 light emitting elements (24x24 pixels)

In the preferred embodiment, control board 12 further comprises a serial data interface unit 15 lighting data interface unit 16, non-volatile memory 17 for storing video files, non-volatile memory 18, preferably EEPROM memory for storing still images. Non-volatile memory 17 is connected directly to a CPU, preferably field programmable gate array (FPGA) 19. Non-volatile EEPROM memory 18 is connected to FPGA 19, for example, via I2C bus.

According to another aspect of present invention the said internal non-volatile memory is NAND type memory, The reason to use NAND flash memory is that it characterized in high capacity, long life time, high speed of data transfer - i.e. data recording in and data reading out of the memory. Low cost and commercial availability is also an advantage of this type of memory.

Non-volatile NAND flash memory 17 can be, for example, flash type 64Mb K9F1208U0B, manufactured by Samsung Electronics, Korea.

Non-volatile EEPROM memory 18 can be, for example, EEPROM type 256Kb 24LC04, manufactured by Texas Instrument, USA.

FPGA 19 can be, for example, XC3S200 type, manufactured by Xilinx Inc, USA.

In the preferable embodiment of present invention the lighting console is DMX protocol console, because DMX, and more precise DMX512 compatible lighting equipment is easily available and well known to light operators and other personal working with stage equipment. The DMX512 is capable of controlling up to 512 addresses per each lighting group which, as described below allows easily produce a large number of various visual effects.

Control board 12 also includes standard electronic components, necessary for correct operation of the display module 1, for example, buffers, tri-state line drivers, and electronic filtering components, such as capacitors and resistors.

Control board 12 also comprises serial number chipset, for example, DS2401, manufactured by Dallas Semiconductor, USA. Serial number chipset store unique 6-bytes number, which is used for the display module 1 identification within the overall large scale display.

In operation of the display module 1, according to control signals from serial data received by control board 12, a part of display image data can be recorder into non-volatile flash memory 17 and/or in non-volatile EEPROM memory 18. Thus, it is possible permanently store video files and still images, for example, pictograms inside the display modules I. The stored video files and/or still images then can be displayed according to control commands from lighting console.

According other aspect of the invention the light emitting elements of the display board 4 are light emitting diodes. Light emitting diodes (LEDs) are available in the primary colors of red, green, blue, white, yellow and orange. LEDs can be encapsulated in many kind of semiconductor packaging, for example, ceramic. Such a packaging can hold single color LED or combination of red, green and blue LEDs, known as 3-in-1 package, or RGB LED.

According to further aspect of the invention the light emitting diodes used as light emitting elements of the display board 4 are RGB type. This type of light emitting diode contains three primary colour chips encapsulated in one ceramic package. The advantage of such packaging is that it mix said primary colors in one point, thus, reducing minimum viewing distance. In preferred embodiment, a light emitting diodes are NSSM016A, manufactured by Nichia, Japan.

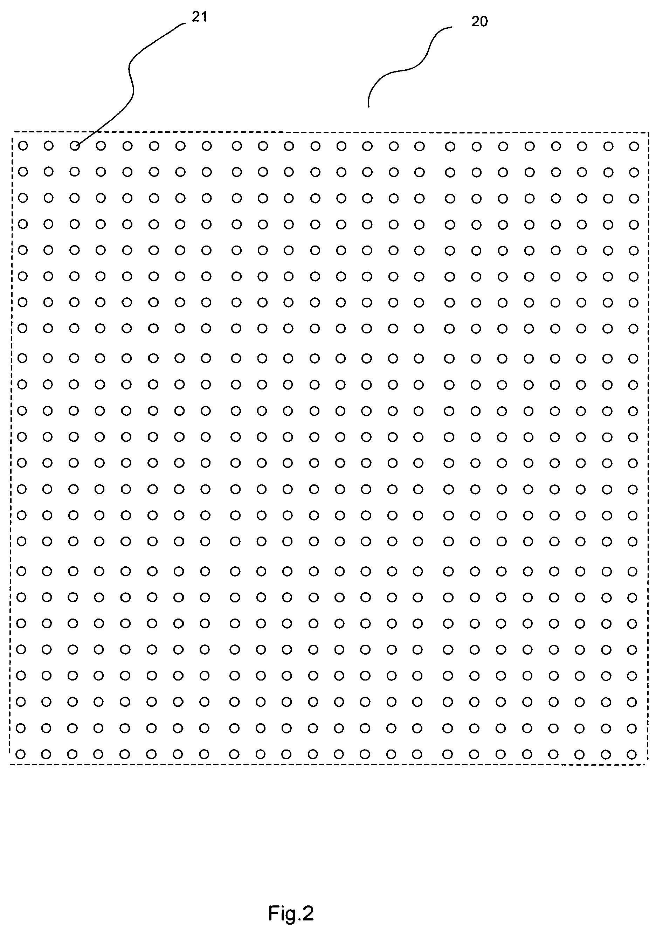

Fig.2 illustrates information area 20 of the display module 1. Information area 20 consists of all pixels 21, associated with the display module 1. In particular case, information area 20 has resolution of 24x24 pixels. Each pixel 21 has red, green, and blue light emitting elements.

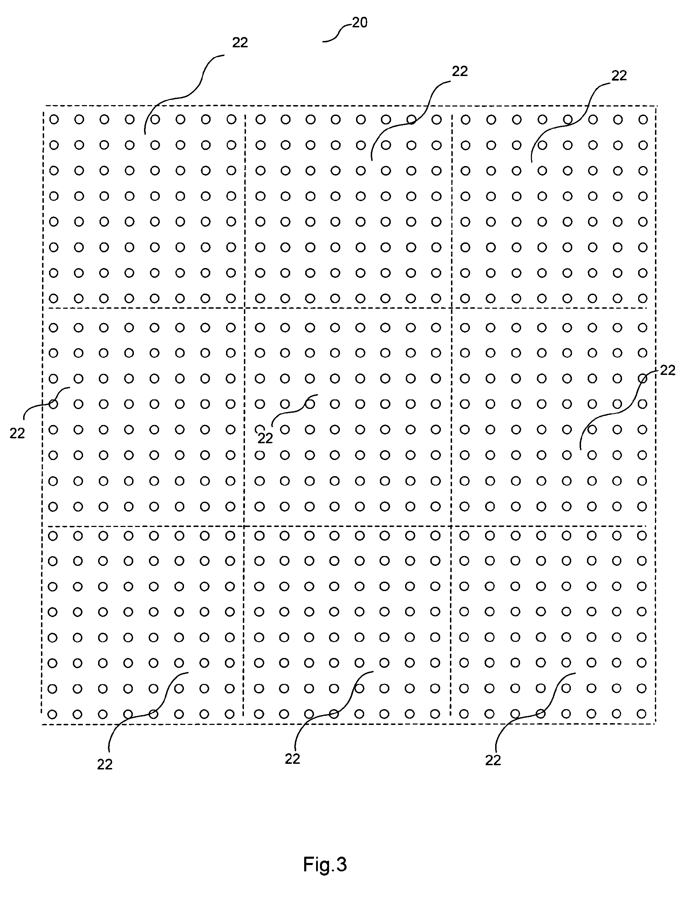

Fig.3 illustrates the display module information area 20, contain 24x24 light emitting elements, said area in accordance with present invention is virtually divided into 9 rectangular sub-areas 22., Each sub-area 22 has 8 by 8 pixels resolution and is capable to display a pictogram stored in internal non-volatile memory.

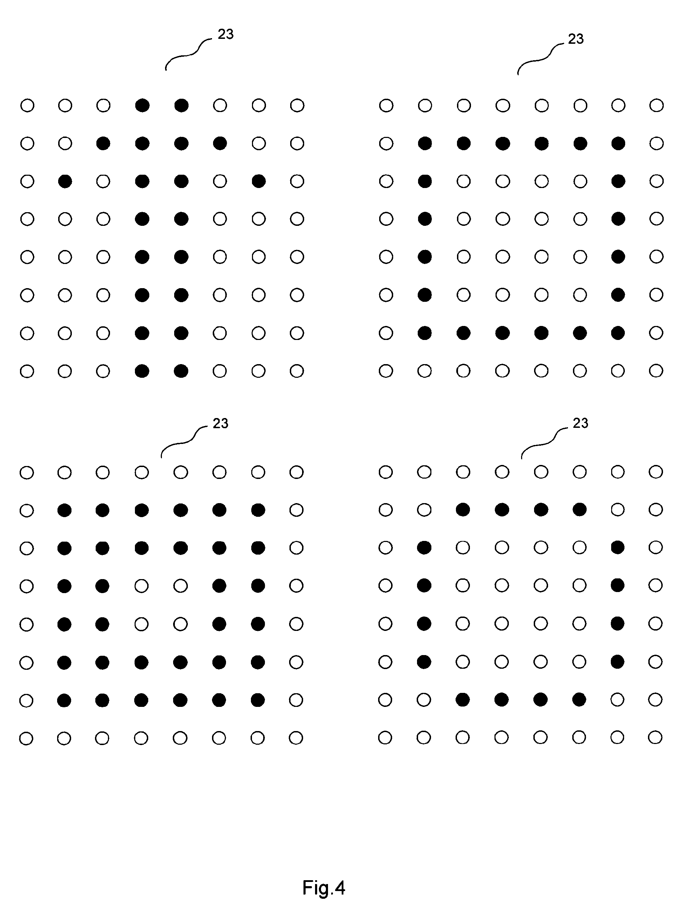

Fig.4 illustrates several types of pictograms 23, in accordance with present invention. A pictogram is a kind of still image, having resolution equal to sub-area 22 resolutions. Pictograms 23 are preferably stored inside non-volatile EEPROM memory 18, and optionally can be stored in flash memory 17.

It is further aspect of the invention that the said still images are small images (pictograms) whose size is smaller the size of the display module. Preferable size of still images is 8x8 pixels. This size allows to create complex enough, and clearly visible distinct images, letters, numbers, arrows, crosses, stars etc.

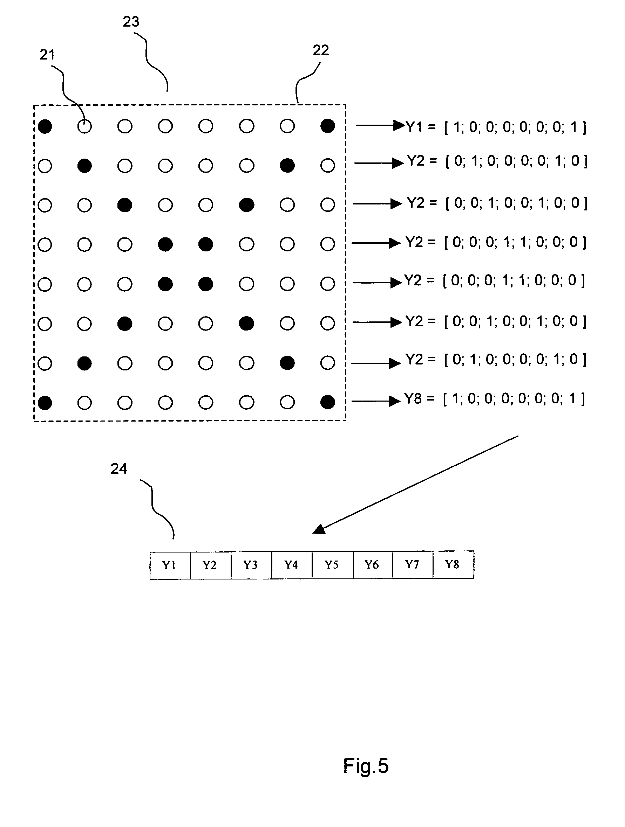

Fig.5 illustrates representation of pictogram 23 in accordance with present invention into internal memory 18 of the display module 1. A pictogram 23 is represented as 64-bit word 24, there one bit is correspond with one pixel 21 of sub-area 22.

Before operation, each display module 1 is assigned with appropriate DMX address. Preferably assigning of DMX address is performed by means of sending appropriate control signals to the display module 1 within serial data flow. FPGA 19 recognizes this command and write DMX address into EEPROM memory 18. As alternative, DMX address can be assigned manually by means of selecting values at appropriate manual decimal switches (not shown).

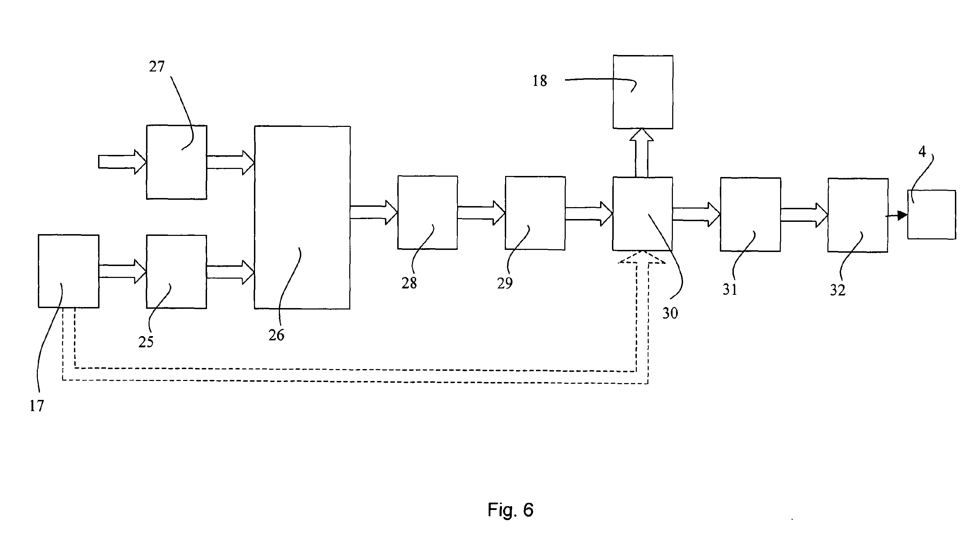

Fig.6 illustrate block diagram of software, according to one of the preferred embodiments, which is running inside of FPGA 19 of the display module 1, and which perform processing of display image data, in accordance with present invention. Block diagram comprises several processing blocks, described below in details.

Video file playing block 25 is responsible for playing video files from non-volatile memory 17. Video file playing block 25 is controlled by values of DMX channel, in particular case by value of channel Nr.9, Nr.10 and Nr.11. Value of DMX channel Nr.9 selects bank of video files, stored in non-volatile memory 17. Number of bank is calculated using formula:

$$\text{Video\_Bank\_number} = \text{value of DMX channel Nr.9} / 16;$$

Value of channel Nr.10 selects video file from selected bank. File number is calculated using formula:

$$\text{Video\_File\_number} = \text{value of DMX channel Nr.10} / 16;$$

Value of DMX channel Nr.11 determines number of frames of video file that was outputted from non-volatile memory 17 to alpha-blending block 26 per one second.

Alpha-blending block 26 is responsible for mixing of image pixel data 27 with image pixel data from video file playing block 25. Alpha-blending block 26 is controlled by value of DMX channels, in particular case by value of channel Nr.1, using the following formula:

$$red\_data\_out = red\_data\_in\ 1 * a + red\_data\_in\ 2 * (1-a)$$

$$green\_data\_out = green\_data\_in\ 1 * a + green\_data\_in\ 2 * (1-a)$$

$$blue\_data\_out = blue\_data\_in\ 1 * a + blue\_data\_in\ 2 * (1-a)$$

where:

"red_data_in 1" is value of red component of image pixel data 27;
"green_data_in 1" is value of green component of image pixel data 27;
"blue_data_in 1" is value of blue component of image pixel data 27;
"red_data_in 2" is value of red component of image pixel data input video playing module 25;
"green_data_in 2" is value of green component of image pixel data from video playing module 25;
"blue_data_in 2" is value of blue component of image pixel data from video playing module 25;
"a" is a coefficient calculated from formula:

$$a = \text{value of DMX channel Nr.1} / 255;$$

Color adjusting block 28 is responsible for changing values of color of image pixel data, received from alpha-blending block 26, in accordance with values of DMX channels; in particular case with values of DMX channels Nr3, Nr4, Nr. 5. Values of color are changed according to the following formula:

$$red\_data\ out = red\_data\_in * a; \text{ where "a"} = \text{value of DMX channel Nr.3} / 255;$$

$$green\_data\ out = green\_data\_in * a; \text{ where "a"} = \text{value of DMX channel Nr.4} / 255;$$

$$blue\_data\ out = blue\_data\_in * a; \text{ where "a"} = \text{value of DMX channel Nr.5} / 255;$$

where:

"red_data_in" is value of red component of image pixel data from alpha-blending block 26; "green_data_in" is value of green component of image pixel data from alpha-blending block 26;
"blue_data_in" is value of blue component of image pixel data from alpha-blending block 26;

Background color processing block 29 is responsible for processing of image pixel data received from color adjusting block 28, in accordance with values of DMX channels; in particular case with values of DMX channels Nr6, Nr7, Nr.8. Processing is performed according to the following formula:

$$red\_data\_out = red\_data\_in\ OR\ a; \text{ where "a"} = \text{value of DMX channel Nr.6};$$

$$green\_data\_out = green\_data\_in \text{ OR } a; \text{ where "a"} = \text{value of DMX channel Nr.7};$$

$$blue\_data\_out = blue\_data\_in \text{ OR } a; \text{ where "a"} = \text{value of DMX channel Nr.8};$$

where:

"red_data_in" is value of red component of image pixel data from color adjusting block 28; "green_data_in" is value of green component of image pixel data from color adjusting block 28;
"blue_data_in" is value of blue component of image pixel data from color adjusting block 28.

Pictogram generating block 30 is responsible for creation of pictograms in image pixel data, in accordance with values of DMX channels, in particular case with values of DMX channels from Nr.12 up to Nr.39. Value of DMX channel Nr.12 select appropriate 64-bit word from non-volatile EEPROM memory 18, optionally from FLASH memory 17, in accordance with the following formula:

$$Pictogram\_number = \text{value of DMX channel Nr.12} / 16;$$

Pictogram generating block 30 further comprises processing of image pixel data from background color processing block 29 in accordance with values of DMX channels; in particular case with values of DMX channels from Nr.13 to Nr.39. Processing is performed according to the following formula:

$$Red\_data\_out\ (x,y) = red\_data\_in\ (x,y) \text{ OR } (mask(x,y) * \text{value of DMX channel Nr.}(n*3 + 13));$$

$$Green\_data\_out\ (x,y) = green\_data\_in\ (x,y) \text{ OR } (mask(x,y) * \text{value of DMX channel Nr.}(n*3 + 14));$$

$$Blue\_data\_out\ (x,y) = blue\_data\_in\ (x,y) \text{ OR } (mask(x,y) * \text{value of DMX channel Nr.}(n*3 + 15));$$

where "n" is a LED display module sub-area number ranging from 0 to 8;
where "mask" is 64-bit pictogram word;
where "x" is horizontal position of pixel within sub-area n;
where "y" is vertical position of pixel within sub-area n;

"red_data_in" is value of red component of image pixel data from background color processing block 29;
"green_data_in" is value of green component of image pixel data from background color processing block 29;
"blue_data_in" is value of blue component of image pixel data from background color processing block 29.

Intensity processing block 31 is responsible for pixel image data processing received from pictogram generating block 30, in accordance with values of DMX channels; in particular case with values of DMX channel Nr.2. Processing is performed according to the following formula:

$$Red\_data\_out = red\_data\_in * a;$$

$$Green\_data\_out = green\_data\_in * a;$$

$$blue\_data\_out = blue\_data\_in * a;$$

where

"a" = value of DMX channel Nr.2 / 16;
"red_data_in" is value of red component of image pixel data from pictogram generating block 30;
"green_data_in" is value of green component of image pixel data from pictogram generating block 30;
"blue_data_in" is value of blue component of image pixel data from pictogram generating block 30.

Pixel image data from intensity processing block 31 is then modulated by PWM modulating block 32 and outputted as serial modulated data stream to LED display board 4.

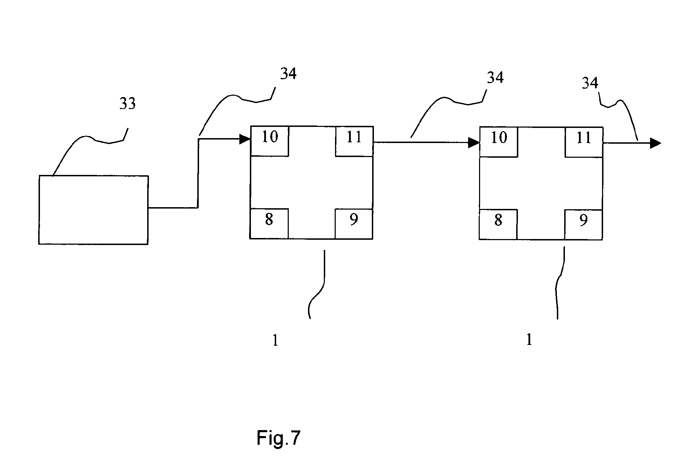

Fig.7 shows configuration of a modular display system with display modules according to present invention, where a number of the display modules 1, preferably LED display modules, runs as lighting device. In this particular embodiment a lighting console 33, is a DMX compatible console and is connected to first display module 1 by DMX compatible data cable 34, display modules 1 are then daisy chained by DMX compatible data cables 34 to each other. Serial data input 8 and serial data output 9 are not used in this control configuration. According to mentioned control configuration, in operation, DMX compatible console 33 sends commands to display modules 1 by changing appropriate values of DMX channels Nr.1 to Nr.39.

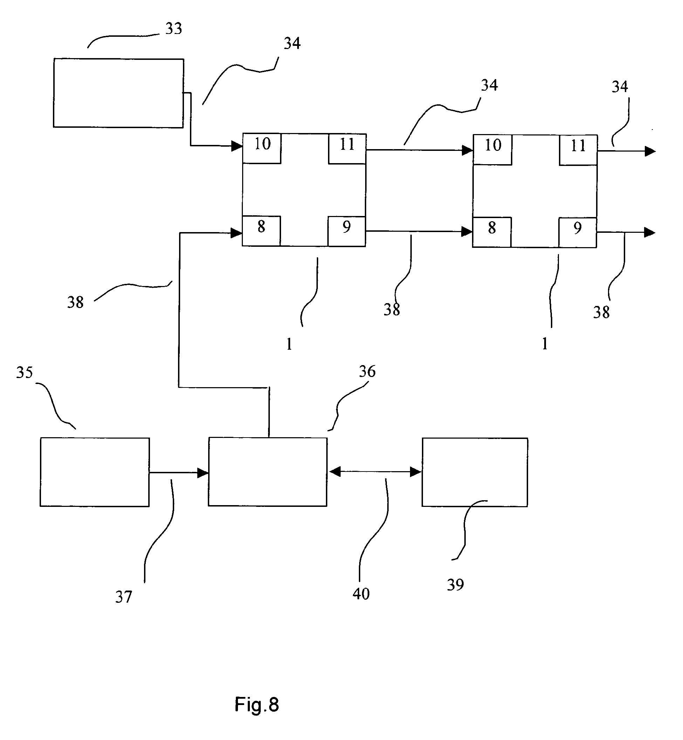

Fig.8 shows system configuration according to present invention, where a number of LED display modules runs as converged video display device and lighting device. DMX compatible console 33 is connected to first display module 1 by DMX compatible cable 34.

Media server 35 is connected to display controller 36 via video cable 37, and display controller 36 is connected to display module 1 by high speed serial data cable 38. Display modules 1 are then daisy chained by serial data cables 38 and DMX compatible cables 34 to each other. Display control computer 39 is connected to display controller 36 via data cable 40. According to mentioned control configuration, in operation, DMX compatible console 33 sends commands to display modules 1 by changing appropriate values of DMX channels Nr.1 to Nr.39, media server 35 send video content to display controller 36. It is possible to mix video content with pictograms 23, and with video files from internal flash memory 17, thus, producing complex video effects. Optionally, DMX compatible console 33 can be connected with media server 35, thus a total control over video display and lighting devices can be performed from the same DMX compatible console.

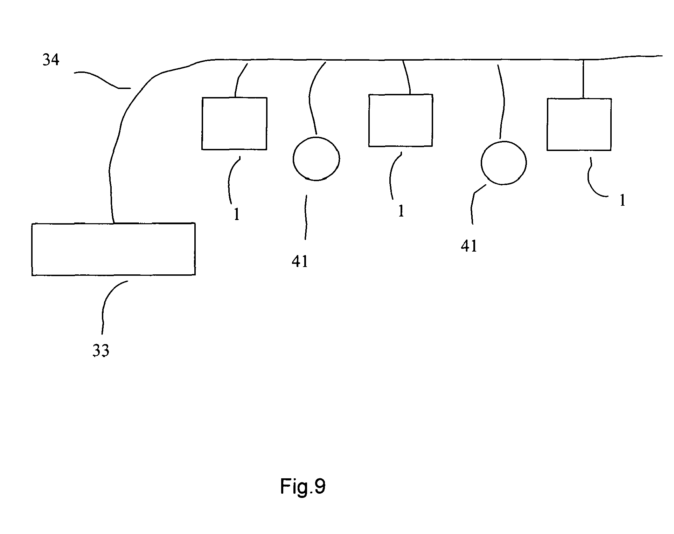

Fig.9 shows another practical application of display modules 1 in accordance with present invention. The display modules are connected together with standard lighting devices 41, for example - moving lights, and controlled by the same DMX compatible console 33.

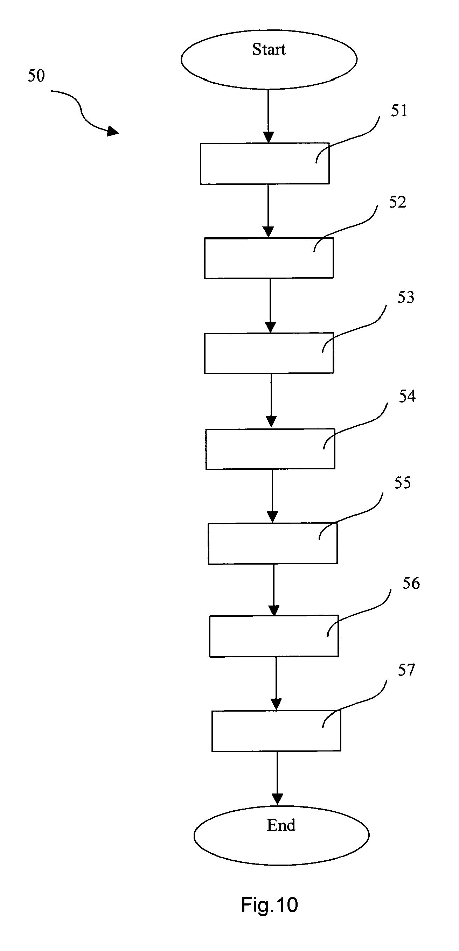

Fig.10 shows a flow diagram of a method 50 of using display modules according to present invention for assembling and operating a lighting or display modular system. For sake of clarity the method 50 is described on the example of the DMX protocol used in the preferred embodiments, however any other standard protocol, for example, LMX or ACN, or a custom protocol can be used. The method 50 includes the following steps:

Step 51: creating video files for each display module and/or creating still images at a separate computer.
This step includes creation of video files on external video equipment and optionally segmentation of overall video picture into segments to be displayed by each display module.
Step 52: assigning an address to each display module.
This step includes an operation of defining an address of each display module within the overall large-scale display system, according to DMX standard.
Preferably assigning of DMX address is performed by means of sending appropriate control signals to the display module 1 within serial data flow. FPGA 19 recognizes this command and writes DMX address into EEPROM memory 18. As alternative, DMX address can be assigned manually by means of selecting values at appropriate manual decimal switches.

Step 53: programming lighting console and creating visual effects.

This step includes programming of DMX compatible lighting console, so that the display modules can generate visual effects required by the system application, namely showing video data from internal non-volatile memory of the display module, showing still images data from internal non-volatile memory of the display module, and optionally, showing video from external video source.

This step further includes programming of DMX compatible lighting console so that display modules can generate visual effects required by the system application by mixing video data from internal non-volatile memory of the display module, with still images data from internal non-volatile memory of the display module, and optionally, with video data from external video source, and showing the result of such mixing.

Step 54: uploading video data and still images.

This step includes uploading video data and still images data into internal non-volatile flash type memory of the display module. This step can be performed, for example, outside of place where event is planned. Uploaded video data and still images data are then permanently stored by the display modules.

Step 55: assembling of large-scale display system.

This step includes physically or mechanically assembling and installing a DMX compatible lighting console and large-scale display construction from an array of display modules, for example a large-scale wall display.

Step 56: linking display system components.

This step includes electrical linking of display modules within the overall large-scale display, to each other by DMX compatible data cables and connecting said display modules to said lighting console by DMX compatible data cable.

Step 57: controlling operation of the display modules through lighting console.

This is controlling or operational stage, when an operator through DMX compatible lighting console control the operation of the large screen modular display system and operation of each display module within the system.

**Claims**

1. A display module for use in a lighting or display modular system which is composed of an array of said display modules, wherein each of said display modules is provided with a display board with an array of individual pixel light emitting elements and with a control board capable of controlling input data from a video source for displaying video as well as of controlling digital input data from a lighting console for creating lighting effects, **characterised in that** each display module is provided with internal non-volatile memory for storing video files and/or still images to be displayed in the absence of said serial input data from the video source.

2. A display module according to claim 1, **characterised in that** the said internal non-volatile memory for storing video files and/or still images is NAND flash memory type.

3. A display module according to claim 1, **characterised in that** the said internal non-volatile memory consist of two parts - one for storing video data and another for storing still images.

4. A display module according to claim 1, **characterised in that** said digital input data from said lighting console are in the form of DMX protocol.

5. A display module according to claim 1, **characterised in that** said still images are of size 8x8 pixels.

6. A display module according to claim 1, **characterised in that** said light emitting elements are light emitting diodes.

7. A display module according to claim 6, **characterised in that** said light emitting diodes are of RGB type.

8. A method of using display modules according to claims 1 for assembling and operating a lighting or display modular system, including the steps of:

   creating video files for each display module and/or creating still images at a separate computer;
   assigning an address to each of the display modules within the overall display modular system;
   programming lighting console;
   uploading video files and still images into non-volatile memory of each display module;
   assembling of lighting or display module system, including installing a compatible lighting console and large-scale display construction from an array of display modules;
   linking lighting or display modular system components, including electrical linking of the display modules within the large-scale display to each other by standard lighting protocol compatible data cables and connecting said lighting console by the same standard lighting protocol compatible data cable to the lighting or display modular system;

controlling operation of the display modules through lighting console.

Fig. 1

Fig.2

Fig.3

Fig.4

23

21

22

Y1 = [ 1; 0; 0; 0; 0; 0; 0; 1 ]

Y2 = [ 0; 1; 0; 0; 0; 0; 1; 0 ]

Y2 = [ 0; 0; 1; 0; 0; 1; 0; 0 ]

Y2 = [ 0; 0; 0; 1; 1; 0; 0; 0 ]

Y2 = [ 0; 0; 0; 1; 1; 0; 0; 0 ]

Y2 = [ 0; 0; 1; 0; 0; 1; 0; 0 ]

Y2 = [ 0; 1; 0; 0; 0; 0; 1; 0 ]

Y8 = [ 1; 0; 0; 0; 0; 0; 0; 1 ]

24

| Y1 | Y2 | Y3 | Y4 | Y5 | Y6 | Y7 | Y8 |

Fig.5

Fig. 6

34    34    34

33

| 10 | 11 |
| 8 | 9 |

| 10 | 11 |
| 8 | 9 |

1    1

Fig.7

Fig.8

34

1

41

1

33

41

1

Fig.9

50

Start

51

52

53

54

55

56

57

End

Fig.10

**European Patent Office**

# EUROPEAN SEARCH REPORT

Application Number

EP 07 01 7951

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 97/39436 A (ADDCO MFG INC [US]) 23 October 1997 (1997-10-23) * page 19 - page 20; figures 2,4,6 * | 1-8 | INV. G06F3/14 |
| X | US 2006/077193 A1 (THIELEMANS ROBBIE [BE] ET AL) 13 April 2006 (2006-04-13) * paragraphs [0036], [0038], [0039], [0048]; figure 1 * | 1-8 | |
| X | WO 00/77565 A (AUGUSTO CARLOS J R P [PT]) 21 December 2000 (2000-12-21) * page 11, line 23 - line 28 * * page 2, line 5 - line 23 * * page 5, line 24 - line 29 * | 1,2 | |
| A | WO 03/060862 A (KONINKL PHILIPS ELECTRONICS NV [NL]; VAN DER VLEUTEN RENATUS J [NL]; J) 24 July 2003 (2003-07-24) | | |
| A | US 6 593 902 B1 (OGINO OSAMU [JP] ET AL) 15 July 2003 (2003-07-15) | | TECHNICAL FIELDS SEARCHED (IPC) G06F G09G |

The present search report has been drawn up for all claims

| Place of search | Date of completion of the search | Examiner |
|---|---|---|
| The Hague | 24 October 2007 | LE CHAPELAIN, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 01 7951

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2007

| Patent document cited in search report | | Publication date | Patent family member(s) | | Publication date |
|---|---|---|---|---|---|
| WO 9739436 | A | 23-10-1997 | AT | 232634 T | 15-02-2003 |
| | | | AU | 731333 B2 | 29-03-2001 |
| | | | AU | 2731597 A | 07-11-1997 |
| | | | CA | 2251572 A1 | 23-10-1997 |
| | | | CN | 1221508 A | 30-06-1999 |
| | | | DE | 69719023 D1 | 20-03-2003 |
| | | | EP | 0894317 A1 | 03-02-1999 |
| | | | JP | 3294853 B2 | 24-06-2002 |
| | | | JP | 2000505213 T | 25-04-2000 |
| US 2006077193 | A1 | 13-04-2006 | NONE | | |
| WO 0077565 | A | 21-12-2000 | AU | 5974300 A | 02-01-2001 |
| WO 03060862 | A | 24-07-2003 | AU | 2002348819 A1 | 30-07-2003 |
| | | | CN | 1615500 A | 11-05-2005 |
| | | | JP | 2005515501 T | 26-05-2005 |
| | | | TW | 249168 Y | 01-11-2004 |
| | | | US | 2005110018 A1 | 26-05-2005 |
| US 6593902 | B1 | 15-07-2003 | JP | 10333631 A | 18-12-1998 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1650739 A2

- EP 1650739 A